# EUROPEAN PATENT APPLICATION

(11) **EP 2 530 630 A1**
(43) Date of publication of application: **05.12.2012**
(21) Application number: 11004412.0
(22) Date of filing: 30.05.2011
(51) Int. Cl.: G06Q 10/00

(54) **Method for position monitoring**

(71) Applicant: Agri-Esprit SAS, 67000 Strasbourg (FR)
(72) Inventor: Nadison, Jeffrey, 67000 Strasbourg (FR); Linke, Christian Wilfried, 68623 Lampertheim (DE)
(74) Representative: Jacobi, Markus Alexander

(57) **Abstract**

A method for monitoring agricultural work performed by at least one agricultural machine (10) including agricultural equipment for performing work on a field , which includes one or more plots or patches, is proposed, which comprises the steps of storing a predetermined field map in memory means (32) accessible by a processing unit (30), continuously providing positional data and sensor data to the processing unit (30) while the agricultural machine (10) is in operation, wherein the positional data comprises information on a position of the agricultural machine (10) and the sensor data includes information on a state of the equipment, continuously checking, whether the agricultural machine (10) is inside a predetermined field, plot or patch based on the positional data, the sensor data and the field map, and generating an output, if the agricultural machine (10) leaves the predetermined field, plot or patch.

## Description

The present invention relates to a method for monitoring agricultural work, in particular for monitoring the position of an agricultural machine or of machines. The present invention further concerns a computer program as well as an agricultural machine performing the method.

### BACKGROUND

In modern agriculture, accuracy and efficiency in cultivating fields are essential factors for productivity and sustainability. Therefore, concepts such as precision agriculture have been developed to aid farmers in optimizing their farm management. Such precision agriculture methodologies usually aim to optimize field level management with regard to enhance product quality, increase agricultural profitability and sustainability, protecting the environment, optimized use of agricultural pesticides, fertilizers, seeds, water, energy and other crop amendments. Particularly, for large agricultural operations with a high number of employees and machines working on the fields, accurate record keeping, automated data capturing, and precision farming techniques have become crucial factors in the challenge to manage the work on the field efficiently and to ensure economic, social and environmental sustainability of the production.

One important aspect in agriculture forestry and related industry typically concerns positioning and navigation of agricultural machines. For this purpose technologies such as satellite imagery, information technology and particularly positioning systems are used in order to determine the position of agricultural machines on fields. Such applications usually involve the use of sensors, global navigation satellite system (GNSS),or information management utilities such as geographic information systems (GIS).

US 5,754,137 describes a process for taking action on productive lands using a working vehicle. The process facilitates positional data of a working vehicle during the operational action and processes the positional data further in a data processing device arranged to the working vehicle. This way the path of the working vehicle transverse within the productive land is determined and continuously indicated visually by means of an output medium. This process is particularly being used within the context of soil treatment or the spreading of substances such as fertilizers.

DE 43 42 171 A1 describes a system that provides real time control of fertilizer distribution, to identify errors in the distribution. A differential global positioning system uses a satellite to emit high frequency radio-waves that are received by a mobile station having a control computer. The transmission is also received by a stationary station, for which the position is accurately known. Correction position data is determined for the mobile station. A vehicle used for spreading fertilizer in agricultural applications is accurately positioned using the data. The control computer has stored a map of the region, in which different agricultural sectors are marked, each of which requires a different spreading density.

Machine operators in agriculture and forestry are very often not familiar with the detailed location of a certain field or plot. Hence, there is a significant risk that a machine operator will enter a wrong field or plot and will start an operation without realizing that he is not in the right place. Not only is this an inefficient use of resources, it can also lead to significant damages, e.g. the wrong field being sprayed and thereby creating illegal chemical residue in the food. Other fatal consequences could follow, when a field is harvested that is not being owned by the one ordering the activity or fields are harvested or trees are cut, which are not designated for harvest.

In order to reduce the risk of performing an operation on the wrong field, positioning and navigation of agricultural machines is utilized. DE 103 14 486 A1 discloses a combination of area indicators and GPS navigation which allows detecting when a machine crosses the border of the field and arrives at the right plot. For this purpose, each field area in a territory is associated with an area indicator, which is formed by a multi digit character sequence. The sequence includes the respective geo coordinates of a corner point and the surrounding rectangle of the field, both stored in a computer data base, particularly a geo information system (GIS). The data base can be accessed wired or wireless through public telecommunication facilities.

The method of DE 103 14 486 A1 allows for positioning the agricultural machine in the right plot and monitoring of the actual agricultural work is only possible to a limited extent. Additionally, the field shape is approximated by a rectangle and any deviations from this shape may introduce errors in the positioning. Thus, further measures to prevent operation on wrong fields and to improve the ability of monitoring agricultural work remain a need in the art.

### OBJECT OF THE INVENTION

It is an object of the present invention to provide a method for monitoring agricultural work which increases the reliability concerning the location, where the agricultural work is performed. It is a further object of the present invention to simplify monitoring and controlling of agricultural work during operation. It is yet another object of the present invention to provide an agricultural machine that allows for monitoring and controlling agricultural work performed by the agricultural machine in a simple and reliable way.

### DESCRIPTION OF THE INVENTION

According to the invention a method for monitoring agricultural work performed by at least one agricultural machine including agricultural equipment for performing work on a field comprising one or more plot(s) or patch(es) is proposed, which comprises the steps of storing a predetermined field map in memory means accessible by a processing unit, continuously providing positional data and sensor data to the processing unit while the agricultural machine is in operation, wherein the positional data comprises information on a position of the agricultural machine and the sensor data includes information on a state of the equipment, continuously checking, whether the agricultural machine is inside a predetermined field, plot or patch based on the positional data, the sensor data and the field map, and generating an output, if the agricultural machine leaves the predetermined field, plot or patch.

Overall, the invention provides a simple and flexible method for monitoring agricultural work in real time. Additionally, the method according to the invention allows farmers to monitor agricultural work on the fly which aids to optimize operations on their fields. Particularly, for farms with a large number of machines and operators working on fields simultaneously the method according to the invention increases reliability of the agricultural work performed.

Furthermore, the combination of positional data and sensor data provides the scope of reacting in a flexible manner if the agricultural machine leaves the predetermined field, plot or patch.

In the sense of the present invention the agricultural work can include any type of work, which is performed by an agricultural machine when cultivating fields. Such agricultural work can include different steps of cultivation reaching from amelioration, preparing the soil for seeding, through seeding and spreading fertilizer to finally harvesting the crop.

An agricultural machine in the context of the present invention refers to any type of machinery including agricultural equipment, which aids to perform any of the steps required to cultivate fields. Such an agricultural machine typically comprises a mobile or semi-mobile part and agricultural equipment such as harvesting equipment gathering the crop or spreading equipment for distributing fertilizer. Typically such equipment is self-propelled, where the mobile or semi-mobile part is combined with the equipment. Alternatively, the equipment is arranged at the mobile or semi-mobile unit separately, e.g. for towing by a tractor. Further examples of agricultural machines are ploughs, threshers, seeders, sprayers, sorters, reapers harvesters and irrigation machines.

Field maps usually describe the territory of a field comprising one or more field plot(s) or patch(es) through the geographical coordinates of the field including its plot(s) and/or patch(es). In one embodiment of the invention the predetermined field map is created by digital mapping prior to operation. Digital mapping or digital cartography refers to a process by which a collection of data, particularly geographical coordinates of fields or field plots, is compiled and formatted into a virtual image. The primary function of this technology is to produce maps that give accurate representations of a particular area or territory, detailing e.g. field borders and tracks leading to certain field plots. The technology also allows the calculation of distances from one place to another.

In one aspect of the invention, the field comprising one or more field plot(s) and/or patch(es) is defined through geographical coordinates indicating borders of the field, its plot(s) and/or patch(es). By defining the borders of the field, its plot(s) or patch(es) the geographical coordinates lying inside and outside of the field, its plot(s) or patch(es) can be discerned.

The geographical data defining the borders of the field and/or the borders of its plot(s) and/or patch(es) can comprise for example the center point or at least one corner point of the field, its plot(s) and/or patch(es) and their corresponding shape. Hereby the shape can be a rectangle, circle, polygon or any other geometrical shape.

Alternatively, the center point of the field, its plot(s) and/or patch(es) in combination with a corresponding radius around the center point can define the borders. Another possibility is to describe the borders of the field including its plot(s) and/or patch(es) by at least one polygon. Further methods of characterizing a field area in a territory are known in the art, see e.g. DE-A 103 14 486.

In another embodiment of the invention the memory means for storing the predetermined field map is portable or semi portable. Portable memory means are realized as for example compact disc (CD), digital video disc (DVD), flash memory disk, read only memory (ROM) and a universal serial bus (USB) stick. Semi-portable memory means are implemented as for example a hard disk drive or a solid state drive, which are preferably assigned to the processing unit.

The processing unit is preferably part of a programmable machine (e.g. a computer) to sequentially and automatically carry out a sequence of arithmetic or logical operations. Depending on the location of the processing unit, the signal flow can follow a centralized or a decentralize scheme. In the centralized scheme, the processing unit is assigned to a remote station such as an office or another remote point, where data from one or more agricultural machines can be gathered and monitored. This scheme provides a very cost effective system, since only a small number of hardware components are needed. In a decentralized scheme, the processing unit is assigned to the agricultural machine, preferably the mobile or semi mobile part. In another embodiment of the decentralized scheme, the processing unit is part of a portable computing device such as a personal digital assistant (PDA), a laptop computer or a smart phone carried by the operator of the agricultural machine or anyone monitoring the field work.

A decentralized scheme provides a simple and direct way for the operator to monitor and control the amount of product harvested while working. Furthermore, the decentralized scheme avoids any problems due to network coverage on farm land, particularly in rural areas.

In one aspect of the invention, the positional data is provided to the processing unit by at least one positioning system that determines the location of the agricultural machine. Such a system is preferably satellite based and/or terrestrial.

With the aid of the positional data the location of the agricultural machine can further be checked in accordance with the locations included in the field map. This way it can be determined, whether the agricultural machine resides on a predetermined field or in a predetermined field patch or plot.

A satellite based positioning system usually provides the global coordinates of the agricultural machine and can be implemented as global navigation satellite system (GNSS) situated on the agricultural machine. A GNSS provides positioning as well as navigation with global coverage and realizations of such a GNSS are for example a global positioning system (GPS), a differential global positioning system (DGPS) or a Galileo system. Such satellite based positioning systems are well known in the art, see e.g. US 5,754,137.

Alternatively, the positional data is provided terrestrially via mobile positioning, which includes a location based service that discloses the actual coordinates of a mobile transceiver, such as a mobile phone, assigned to the agricultural machine. Another possibility to provide positional data terrestrially is to simply use a reference point fixed with respect to the field and to continuously determine the relative location of the agricultural machine through the distance and the angle of the agricultural machine to the reference point by using e.g. laser beams. Further options to realize the positioning system are gyroscopic systems, radiogoniometric systems, odometric systems, accelerometric, light or laser beam based positioning. In yet another implementation, the positioning system includes a combination of one or more of the aforementioned satellite based or terrestrial systems in order to enhance accuracy.

In another aspect of the invention, the positional data includes the locations of the agricultural machine and associated time stamps. Hence, time stamps are associated to the locations of the machine represented by the coordinates of the machine's position. This way further information on the agricultural work can be deduced and optionally be stored in memory means preferably in some data base structure. Such information can for example include the time taken for each operational step on different fields.

In one embodiment, the sensor data is provided to the processing unit by one or more sensors situated on the agricultural machine, preferably on the agricultural equipment.

The sensor data preferably comprises information on the state of the agricultural equipment, which particularly includes whether the equipment is active, i.e. engaged and/or running. This information is retrieved by facilitating one or more sensor(s) measuring equipment related parameters. Such sensor(s) can comprise mechanical sensors, ultrasonic sensors, light transmission or light reflection including color changes, radiation, electromagnetic waves, electrical means (e.g. resistance, dielectricity, eddy current), magnetism or any combination of those. The corresponding equipment related parameters can be related to force, stress (strain gauges), torque, acceleration, movement including oscillation, vibration, electric current, voltage, (electric) power consumption, flowmeters (liquids, gas) or material flow / material layer.

In one implementation, the at least one positioning system and the one or more sensor(s) communicate with the processing unit via bi-directional, real time telematics. In this context real time telematics allow for continuously sending, receiving and storing information, particularly GPS data, via telecommunication devices in conjunction with e.g. electronic mapping. The positional data and the sensor data may be provided to the processing unit via a wired or wireless connection. If the processing unit is situated at an external station, the positioning system and the one or more sensor(s) situated at the machine preferably communicate with the processing unit via a wireless network interface providing data from the machine to the processing unit. Herein a wireless network interface refers to any device using a wireless communication protocol for exchanging data. If the processing unit is situated at the machine, the connection to the positioning system and the one or more sensor(s) may be realized e. g. directly through a wired connection or alternatively through a wireless network interface.

During operation of the machine, the location of the machine and the state of the equipment are preferably checked in real time. Based on the positional data, the sensor data and the predetermined field map the processing unit continuously checks, whether the agricultural machine is inside a predetermined field, plot or patch, and generates an output, if the agricultural machine leaves the predetermined field, plot or patch. On arrival at the right plot, while the sensor data indicates that the equipment is deactivated, the processing unit may notify the operator through a signal provided by the output medium located on the machine.

In one implementation, the processing unit generates a signal indicating that the work is successfully completed, if the positional data indicates that the machine leaves a predetermined field, plot or patch and if the sensor data indicates that the agricultural equipment is deactivated. In this embodiment, the time stamp preferably recorded with the locations of the machine during operation can be utilized to determine and store information on the working time with respect to e.g. different fields or operators.

In a preferred embodiment, the processing unit generates a warning signal, if the positional data indicates that the machine leaves a predetermined field, plot or patch and if the sensor data indicates that the equipment is active. The warning signal can be provided to a warning unit, which may be located on the machine and/or the remote station. This way the warning signal can be provided to an output medium generating an acoustical, an optical and/or a vibrational warning to the operator of the machine or a third party. Possible realizations of the output medium include a screen or a speaker arranged on the machine or at the remote station. Another option to warn the operator or a third party is to transfer the warning signal to a mobile device such as a mobile phone or laptop computer.

In another preferred embodiment, the agricultural machine and/or the equipment are remote controlled, if the positional data indicates that the machine leaves a predetermined field, plot or patch and if the sensor data indicates that the equipment is active. In this case the remote control is preferably controlled by the processing unit capable of triggering different ways of remote control. So can the equipment be automatically deactivated, if the sensor data indicates that the equipment is active, or engaging the equipment is forbidden. In this case the processing unit preferably interacts with the equipments control system through mechanical, hydraulically or electrical activators or through interacting with an electric or electronic control systems such as the Implement-ISOBUS. Alternatively, the remote control stops the machine or interacts with the steering system, if the position of the machine is outside the predetermined plot. In another embodiment, other connected units are able to override the processing unit's decision in order to facilitate a remote shut down disregarding the information included in the positional data and/or sensor data. Optionally, the information on the gathered through e.g. the positional data and the sensor data during operation of the agricultural machine is stored in memory means. Furthermore, such information can be divided into groups referring to e.g. kinds of agricultural work, fields the work was performed on and/or machines or operators performing the work. Such data analysis allows building up a detailed data base which aids farm management such as the optimization of harvesting or seeding logistics, storage management, processing, and so on.

In one implementation of the method according to the invention, all the data used in the context of the present invention is organized in a geographic information system (GIS) for representation which combines geographical data with attributive data. In a basic GIS the geographical data comprise information on the location of the agricultural machine and the attributive data includes for example sensor data, yield map data, the working width data of the harvesting equipment, machine operator identifiers, parameters regarding the weather conditions or any other field work related data. In one realization of a GIS, a time line is included as described for example in EP-A 1 647 938. With the aid of a GIS, the data used for monitoring the amount of product harvested is represented in a clear and instructive way in order to aid farmers cultivating their fields in a simpler and more precise way.

According to the invention a computer program for performing the method previously explained, when executing the computer program on a computer. The computer program is preferably stored on a machine readable storage medium or on a removable CD-ROM, flash memory, DVD or USB-stick. Additionally or alternatively, the computer program is provided on a server to be downloaded via for example a data network such as the internet or another transfer system such as the phone line or a wireless transfer connection.

According to the invention an agricultural machine including agricultural equipment for performing work on a field, which includes one or more plot(s) or patch(es), is proposed, wherein the agricultural machine comprises at least one positioning system providing positional data including information on the location of the agricultural machine, and one or more sensors providing sensor data including information on a state of the agricultural equipment, wherein the at least one positioning system is in communication with a processing unit for checking whether the agricultural machine is inside a predetermined field, plot or patch, which is provided by memory means, and for generating an output, if the agricultural machine leaves the predetermined field, plot or patch. Furthermore, the agricultural machine encompasses the necessary elements for performing the respective agricultural work, which are known in the art. Preferably, the agricultural machine comprises the components described in the context of the method according to the invention in order to be capable of performing the same.

An agricultural machine of this type is particularly advantageous, since it allows monitoring the agricultural operations performed with the agricultural machine in a simple and reliable way.

Furthermore, by including a positioning system and sensor(s) the machine provides the scope of reacting in a flexible manner depending on the information included in the positioning data and sensor data. This is particularly relevant, when the agricultural machine leaves the predetermined field, plot or patch.

In one embodiment, the field comprising one or more field plot(s) and/or patch(es) is defined through geographical coordinates indicating borders of the field, its plot(s) and/or patch(es). In another embodiment, the state of the equipment includes information on whether the equipment is active.

In yet another embodiment, the processing unit and the memory means storing the field map are located on the agricultural machine or at a remote station. Furthermore, the processing unit can communicate with the at least one positioning system and the one or more sensors via bi-directional, real time telematics.

In one implementation, a warning unit is located on the agricultural machine for warning an operator of the agricultural machine or at a remote station for warning a third party, if the positional data indicates that the machine leaves a predetermined field, plot or patch and if the sensor data indicates that the equipment is active. In another implementation, the agricultural machine and/or the equipment are remote controlled, if the positional data indicates that the machine leaves a predetermined field, plot or patch and if the sensor data indicates that the equipment is active.

In a further aspect of the invention the method lined out above may be used in construction, particular road construction. In this aspect the method for monitoring constructional work performed by at least one machine including constructional equipment for performing work on a construction area comprising one or more plot(s) is proposed, which comprises the steps of storing a predetermined area map such as a road map in memory means accessible by a processing unit, continuously providing positional data and sensor data to the processing unit while the machine is in operation, wherein the positional data comprises information on a position of the machine and the sensor data includes information on a state of the constructional equipment, continuously checking, whether the machine is inside a predetermined area or plot based on the positional data, the sensor data and the area map, and generating an output, if the machine leaves the predetermined area or plot.

The method described above in the context of agricultural work may also be employed in constructional work to increase the reliability of the location, where the constructional work is performed. Furthermore the method simplifies the monitoring and controlling of constructional work during operation. In this context, all the preferred embodiments lined out above may be employed in the same manner for constructional work. In this context, any references to the agricultural machine including agricultural equipment may understood in the sense of machine including constructional equipment, references to field map may be understood in the sense of area map, references to field comprising one or more plot(s) or patch(es) may be understood in the sense of area comprising one or more plot(s) on the constructional site.

Further referring to the use of the proposed method in construction, a computer program may perform the method previously explained, when executing the computer program on a computer. The computer program is preferably stored on a machine readable storage medium or on a removable CD-ROM, DVD or USB-stick. Additionally or alternatively, the computer program is provided on a server to be downloaded via for example a data network such as the internet or another transfer system such as the phone line or a wireless transfer connection.

Further referring to the applicability of the invention to construction a machine including constructional equipment for performing constructional work in an area or plot may be used, wherein the machine comprises at least one positioning system providing positional data including information on the location of the machine, and one or more sensors providing sensor data including information on a state of the constructional equipment, wherein the at least one positioning system is in communication with a processing unit for checking whether the machine is inside a predetermined area or plot, which is provided by memory means, and for generating an output, if the machine leaves the predetermined area or plot. Furthermore, the machine encompasses the necessary elements for performing the respective constructional work, which are known in the art. Preferably, the machine comprises the components described in the context of the method according to the invention in order to be capable of performing the same.

The machine used on the construction area allows for monitoring and controlling constructional work performed by the machine in a simple and reliable way. Preferably, the method and the machine describes above in the context of agricultural work may also be employed in constructional work.

Accordingly, all the preferred embodiments lined out above may be employed in the same manner. Of course, any references to the agricultural machine including agricultural equipment may be understood in the sense of machine including constructional equipment, field map may be understood in the sense of area map, field comprising one or more plot(s) or patch(es) may be understood in the sense of the area comprising one or more plot(s) on the constructional site.

### DRAWINGS

Further advantages, characteristics and details of the invention are presented on the basis of exemplary embodiments, which are described below with reference to the drawings.

It is shown in:
- Fig. 1: a schematic diagram of an agricultural machine on a field to be cultivated,
- Fig. 2: the functional components of an agricultural machine and a station adapted to perform the method according to the present invention in a centralized scheme,
- Fig. 3: the functional components of an agricultural machine and a station adapted to perform the method according to the present invention in a decentralized scheme,
- Fig. 4: a flow chart indicating the interactions of the components shown in figures 2 and 3.

### EMBODIMENTS

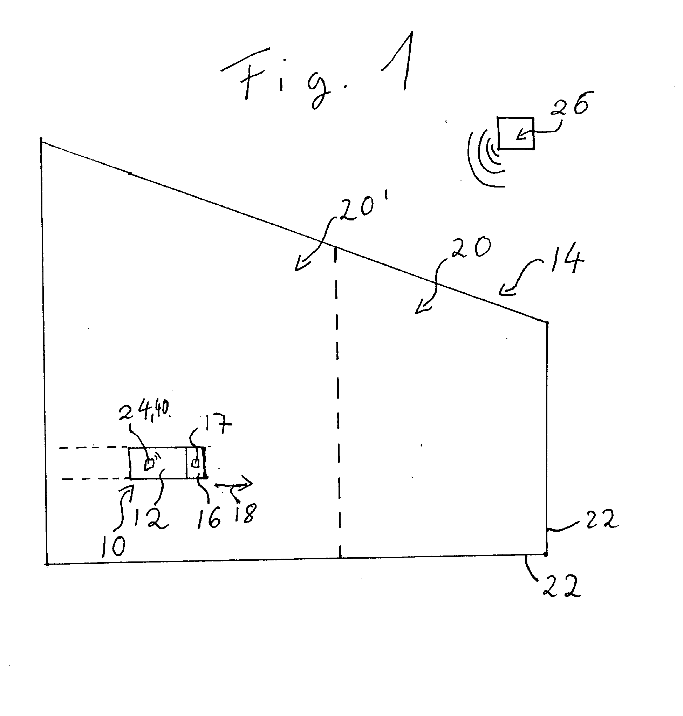

Figure 1 schematically illustrates an agricultural machine 10 comprising e.g. a tractor 12 in a typical situation on a field plot 14 during cultivation. Usually the territory belonging to one farmer is divided into different fields 14 comprising plots and patches 20, 20', where each field plot 14 is mapped in a field map via its geographical coordinates. The field plot 14 is defined by borders 22 and contains patches 20, 20', which may e.g. simply host one kind of crop or alternatively host different kinds of crop on each field patch 20, 20'.

Depending on the location of the agricultural machine 10 in the field plot 14 different types of crop may be seeded, treated or harvested. The operation, which is to be performed, thus depends on the field plot 14 or the patch 20, 20'.

In the illustration of figure 1 the agricultural machine 10 is armed with agricultural equipment 16 and performs agricultural work such as harvesting where the ripened crop is gathered. In such a situation, the agricultural machine 10 moves along the field plot 14 as indicated by arrow 18.

Furthermore, the agricultural machine 10 comprises a GPS-receiver 24 in communication with a GPS satellite 26 for continuously tracking its location on the field plot 14. Additionally, the state of the harvesting equipment is continuously monitored by sensors 17 while the agricultural machine 10 is in operation. According to the present invention, this data in combination with the field map are utilized to reliably monitor the location of the machine 10 in real time.

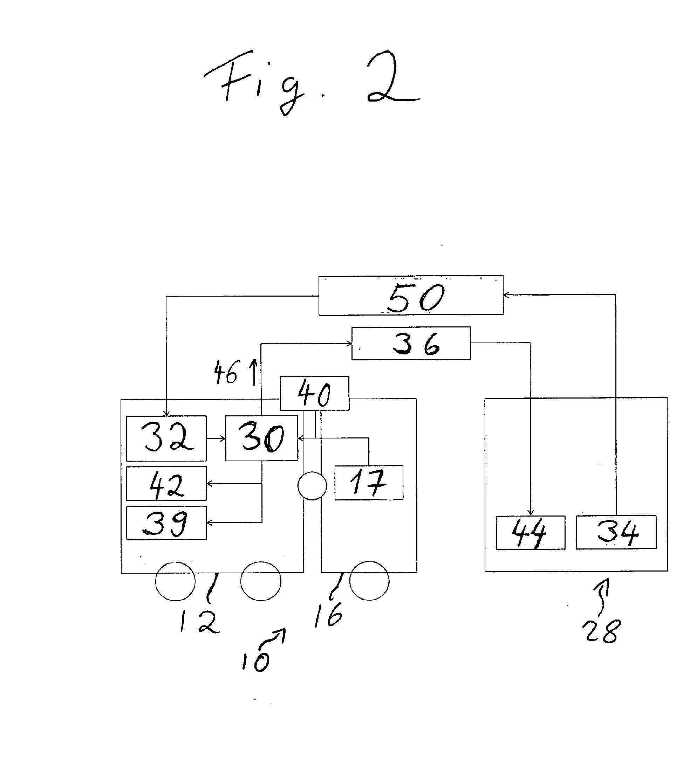

Figure 2 illustrates an agricultural machine 10 and a remote station 28 comprising means to perform the method for monitoring agricultural work according to the present invention. In the embodiment shown in figure 2 the functional components that may be utilised to perform the method according to the present invention are distributed on the agricultural machine 10 and the station 28 following a decentralized scheme. Decentralized in the sense of the present invention refers to a system, where the computer 30 that processes and distributes the data is located on the agricultural machine 10.

In the embodiment shown in figure 2 the station 28 includes means 34, which define the field plot 14 to be worked on by providing a digital map of the farmer's territory. These means 34 usually comprise some type of memory so much as CD, DVD, flash, USB stick or any type of memory associated to a computer. Furthermore, the means 34 to define the plot 14 include a human machine interface, through which an operator can choose the plot 14 to be worked on. This information is then transferred to the agricultural machine 10. The transfer of the plot coordinates is performed via a transfer system 50 implemented as e.g. telematics, services such as mobile phone network or data storage devices or a user interface.

The information on the plot coordinates is then saved in memory means 32 located on the mobile unit 12 of the agricultural machine 10. This way the computer 30 can access the predefined plot coordinates at any time during operation. Furthermore, the computer 30 is in connection to a positioning system 40 continuously supplying positional data in real-time and an activity sensor 17 located on the equipment 16 continuously monitoring the activity state of the equipment 16. Both, the data from the positioning system 40 and the activity sensor 17 are continuously provided to the computer 30. This way the computer 30 can compare the positional data to the plot coordinates stored in the memory 32.

In case the positioning system 40 provides positional data which indicate that the agricultural machine 10 has left the predefined borders 22 of the plot 14 and the equipment 16 is active, the computer 30 sends a signal to a warning unit 42 and/or deactivation unit 39 located on the mobile unit 12. This way the operator of the agricultural machine 10 may be warned via acoustic, vibrational or optical warnings emitted by some type of output medium and correct the position of the agricultural machine 10. Furthermore, the deactivation signal sent to the deactivation unit 39 modifies the status of the equipment 16 by deactivation. Depending on the deactivation control the equipment 16 may be lifted or completely switched off or the tractor may be brought to a complete stop.

Additionally, in any cases where the agricultural machine 10 leaves the borders 22 of the predefined plot 14, the computer 30 sends out a warning 46 to the station 28. This is preferably done via real-time telematics or some type of mobile phone network in order to notify not only the machine operator, but also a third party, such as a supervisor. The warning unit 42 sending out the warning 46 to a third party can be fixed in a central office where all information on the fieldwork is gathered or alternatively the warning unit 44 may be a mobile phone of e.g. a supervisor administrating the fieldwork. Alternatively, the computer 30 can also take control over the agricultural machine 10 and remote control for example the steering.

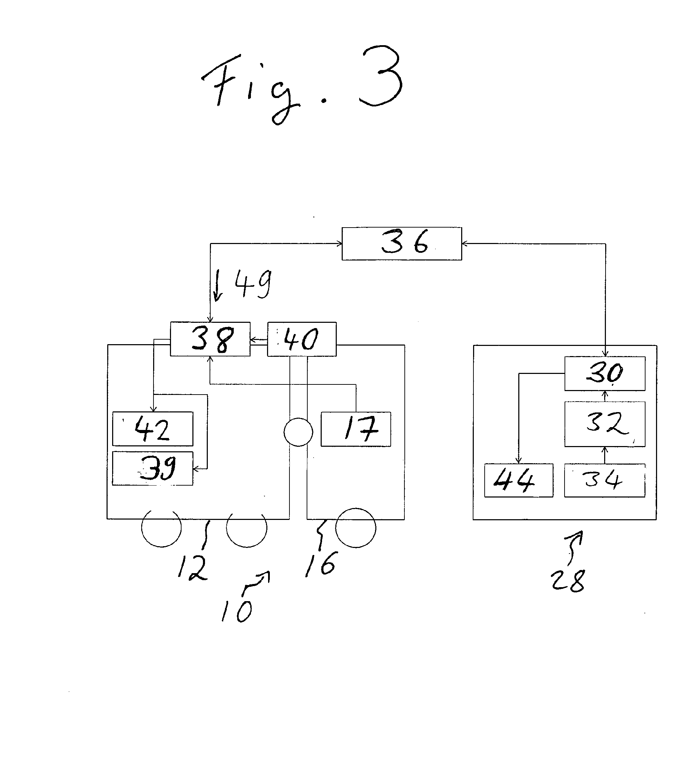

Figure 3 shows the functional components located on the agricultural machine 10 and in the remote station 28 in order to perform the method according to the present invention. In contrast to figure 2, figure 3 illustrates a centralized scheme for distributing the functional components. In the context of the present invention, a centralized scheme comprises a computer 30 which gathers and distributes information from a centralized station 28 to one or more agricultural machines 10.

In the embodiment according to figure 3 the centralized station 28 comprises means 34 to define the plot 14, which, as mentioned before, can include some type of memory such as CD, DVD, flash or USB. The memory 32 is in connection to computer 30 such that the plot coordinates and borders 22 of the plot 14 are continuously accessible by the computer 30.

The computer 30 further includes a data interface which facilitates data transfer via a transfer system 36 such as real-time telematics or mobile phone network to a data interface 38 located on the agricultural machine 10. The positioning system 40 and the activity sensor 17 are also located on the agricultural machine 10 and the data interface 38 is provided with positional data as well as sensor data 17 including information on the state of the agricultural equipment 16. The data interface 38 provides this information via the transfer system 36 to the computer 30 which processes the data.

In case the positional data sent by the interface 38 indicates that the agricultural machine 10 has left borders 22 of the predefined plot 14 and the data provided by the activity sensor 17 indicates that the equipment 16 is active, the computer 30 sends out a warning signal 49 via the transfer system 36 to the interface 38 located on the agricultural machine 10. This warning is then provided to the warning unit 42 located on the mobile unit 12 of the agricultural machine 10 and to the deactivation unit 39 of the agricultural machine 10. This way the machine operator can be warned acoustically or optically via some type of output medium and correct the position of the agricultural machine 10.

Apart from providing a warning signal 49 to the interface 38 via the transfer system 36 the computer 30 provides a further warning signal 49 to the warning unit 44 which is equipped to notify a third party. This warning unit 44 is a unit fixed at the station 28 in order to gather warning signals from one or more agricultural machines 10 or the warning unit 44 may be a mobile phone in order to notify a third party such as a supervisor administrating the fieldwork.

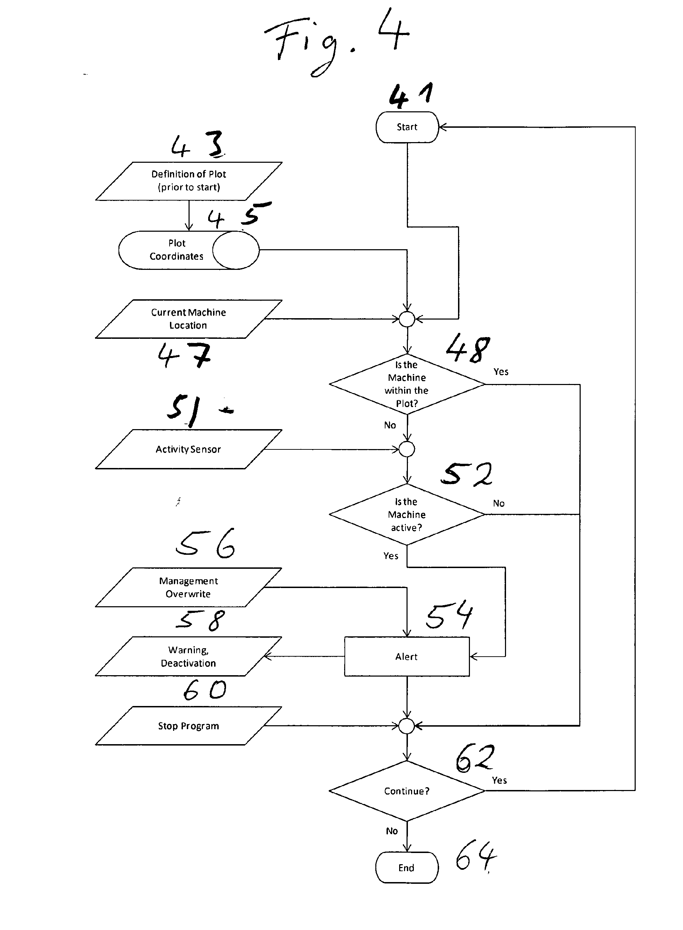

Figure 4 shows a flowchart of the method for monitoring field work according to the present invention, wherein the interaction between the components shown in figures 2 and 3 is further illustrated. As a first step 43 for monitoring agricultural work performed by an agricultural machine 10 the plot to be cultivated is defined prior to starting the work in step 41 of figure 4. After the definition of plot 43, the plot coordinates 45 are stored in order to be compared to positional data 47 provided by the agricultural machine 10.

When starting the work in step 41 the system is activated, whereby the activation of the agricultural machine 10, in particular the mobile unit 12 determines the starting point of a method. Whenever the agricultural machine 10 is activated the current machine location 47 is provided continuously in real-time and compared to the predefined plot coordinate 45 in order to check in step 48 whether the current machine location is still within the predefined plot 43. If the location is within the predefined plot 43 the previous steps 41, 45 and 48 will be repeated.

Whenever the machine 10 crosses the border of the predefined plot of step 43 it will be checked in step 52, whether the activity sensor 17 provides sensor data indicating that the machine is active in step 51. If the machine is not active, the previous steps will be repeated.

If, however, the activity sensor 17 provides sensor data indicating that the machine is active in step 52, an alert will be generated in step 54, which facilitates to send out warnings and deactivate the equipment 58. A management override option 56 allows to either switching off the alert manually by a third party or the machine operator. After the program ran through step 41 to 62, these steps can either be repeated or if the agricultural machine is inactive the program may be ended 64.

### Bezugszeichenliste

- 10: agricultural machine
- 12: tractor
- 14: field/plot
- 16: equipment
- 17: activity sensors
- 18: moving direction/track
- 20, 20': patches, subplots
- 22: field borders
- 24: GPS-receiver
- 26: GPS-satellites
- 28: remote station
- 30: computer, processing unit
- 32: memory means
- 34: definition of coordinates including interface for selection
- 36: transfer system/telematics
- 38: interface
- 40: positioning system
- 41: start of system
- 42: warning unit
- 39: deactivation unit
- 44: warning unit at station
- 45: plot coordinates/field map
- 46: warning information
- 47: position data
- 48: check machine in the plot
- 50: transfer system
- 51: activity sensor data
- 52: check equipment is active
- 54: alert generation
- 56: management overwrite
- 58: alert/deactivation
- 60: program stop
- 62: check continue
- 64: end of program

## Claims

1. A method for monitoring agricultural work performed by at least one agricultural machine (10) including agricultural equipment for performing work on a field (14), which includes one or more plot(s) or patch(es) (20, 20'), comprising the steps:
a) storing a predetermined field map (45) in memory means (32) accessible by a processing unit (30),
b) continuously providing positional data (47) and sensor data (51) to the processing unit (30) while the agricultural machine (10) is in operation, wherein the positional data comprises information on a position of the agricultural machine (10) and the sensor data includes information on a state of the equipment (16),
c) continuously checking (48, 52), whether the agricultural machine (10) is inside a predetermined field (14), plot or patch (20, 20') based on the positional data, the sensor data and the field map, and
d) generating an output (58), if the agricultural machine (10) leaves the predetermined field (14), plot or patch (20, 20') and if the sensor data indicates that the equipment (16) is active.

2. The method according to claim 1, wherein the field comprising one or more field plot(s) and/or patch(es) (20, 20') is defined through geographical coordinates indicating borders of the field (14), its plot(s) and/or patch(es) (20, 20').

3. The method according to any of claims 1 or 2, wherein the processing unit (30) is assigned to the agricultural machine (10) or a remote station (28).

4. The method according to any of claims 1 to 3, wherein the positional data is provided to the processing unit (30) by at least one positioning system (40) that determines the location of the agricultural machine (10).

5. The method according to any of claims 1 to 4, wherein the sensor data comprises information on the state of the equipment (16) of the agricultural machine (10) including whether the equipment (16) is active.

6. The method according to any of claims 4 or 5, wherein the positioning system (40) and the one or more sensor(s) (17) communicate with the processing unit (30) via bi-directional, real time telematics (50, 36).

7. The method according to any of claims 1 to 6, wherein a warning signal is generated by the processing unit (30), if the positional data indicates that the machine (10) leaves a predetermined field (14), plot(s) or patch(es) (20, 20') and if the sensor data indicates that the equipment (16) is active.

8. The method according to claim 7, wherein the warning signal is provided to an output medium generating an acoustical, an optical and/or a vibrational warning to an operator of the machine (10) or a third party.

9. The method according to any of claims 1 to 8, wherein the agricultural machine (10) and/or the equipment (16) are remote controlled, if the positional data indicates that the machine (10) leaves a predetermined field (14), plot or patch (20, 20') and if the sensor data indicates that the equipment (16) is active.

10. The method according to any of claims 1 to 9, wherein the processing unit (30) automatically deactivates the equipment (16), stops the machine (10) or interacts with the steering system of the machine (10), if the machine (10) leaves the predetermined plot (20, 20').

11. A computer program for performing the method of claims 1 to 10, when executing the computer program on a computer (30).

12. An agricultural machine (10) including agricultural equipment (16) for performing work on a field (14), which includes one or more plot(s) or patch(es) (20, 20'), comprising:
- at least one positioning system (40) providing positional data including information on the location of the agricultural machine (10), and
- one or more sensors (17) providing sensor data including information on a state of the agricultural equipment (16),
wherein the at least one positioning system (40) is in communication with a processing unit (30) for checking (48) whether the agricultural machine (10) is inside a predetermined field (14), plot or patch (20, 20'), which is provided by memory means (32), and for generating an output (58), if the agricultural machine (10) leaves the predetermined field (14), plot or patch (20, 20') and if the sensor data indicates that the equipment (16) is active.

13. The agricultural machine (10) according to claim 12, wherein the processing unit (30) and the memory means (32) storing the field map (45) are located on the agricultural machine (10) or at a remote station (28).

14. The agricultural machine (10) according to any of claims 12 or 13, wherein the processing unit (30) communicates with the positioning system (40) and the one or more sensors (17) via bi-directional, real time telematics (36, 50).

15. The agricultural machine (10) according to any of claims 12 to 14, wherein a warning unit (42) is located on the agricultural machine (10) for warning an operator of the agricultural machine (10) or at a remote station (28) for warning a third party, if the positional data indicates that the machine (10) leaves a predetermined field (14), plot(s) or patch(es) (20, 20') and if the sensor data indicates that the equipment (16) is active.
